Europäisches Patentamt

European Patent Office

Office européen des brevets

(19)

(11) Veröffentlichungsnummer : **0 214 119 B1**

(12) **EUROPÄISCHE PATENTSCHRIFT**

(45) Veröffentlichungstag der Patentschrift :
**09.10.91 Patentblatt 91/41**

(51) Int. Cl.⁵ : **A01G 9/20, A01G 9/16**

(21) Anmeldenummer : **86890232.1**

(22) Anmeldetag : **19.08.86**

(54) **Frühbeetkasten.**

(30) Priorität : **19.08.85 AT 2411/85**

(43) Veröffentlichungstag der Anmeldung :
**11.03.87 Patentblatt 87/11**

(45) Bekanntmachung des Hinweises auf die
Patenterteilung :
**09.10.91 Patentblatt 91/41**

(84) Benannte Vertragsstaaten :
**CH DE FR GB LI NL SE**

(56) Entgegenhaltungen :
**CH-A- 160 102
CH-A- 243 976**

(56) Entgegenhaltungen :
**DE-A- 2 907 344
FR-A- 2 313 864
FR-A- 2 554 545
GB-A- 641 859**

(73) Patentinhaber : **Wüster, Heinrich
Auwerk 18
A-6460 Imst/Tirol (AT)**

(72) Erfinder : **Wüster, Heinrich
Auwerk 18
A-6460 Imst/Tirol (AT)**

(74) Vertreter : **Berger, Erhard, Dr.
Siebensterngasse 39 Postfach 306
A-1071 Wien (AT)**

Jouve, 18, rue Saint-Denis, 75001 PARIS

## Beschreibung

Die Erfindung betrifft einen Frühbeetkasten mit zwei in einer Richtung mit Abstand hintereinander angeordneten, vorzugsweise lichtdurchlässigen, Giebelwänden und mit sich in dieser Richtung erstreckenden, quer zu dieser Richtung nebeneinander angeordneten und an den beiden Giebelwänden jeweils auf einem Teil von deren Umriß anliegenden lichtdurchlässigen fensterartigen Plattenelementen, wobei der von den beiden Giebelwänden an zwei entgegengesetzten Seiten begrenzte Innenraum des Frühbeetkastens an den übrigen Seiten und nach oben hin von den lichtdurchlässigen fensterartigen Plattenelementen begrenzt ist, von denen beidseits der die Spitzen der beiden Giebelwände verbindenden Giebelachse jeweils zumindest zwei Plattenelemente angeordnet sind, von denen zumindest die der Giebelachse unmittelbar benachbart angeordneten Plattenelemente von den Giebelwänden abnehmbar sind.

Bekannte Frühbeetkästen für Frühbeete für den Hausgarten oder den Erwerbsgärtner bestehen im wesentlichen aus einem meist länglichen kastenförmigen, unten offenen und oben durch einen Deckel verschließbaren Behälter, dessen Seitenwände entweder aus Holz, Beton oder aber bei schon bekannten Lösungen aus lichtdurchlässigen Kunststoffplattenelementen gebildet werden. Diese bekannten Frühbeetkästen besitzen zumeist an ihren beiden in Längsrichtung des Frühbeetes verlaufenden Seiten eine niedrigere und eine höhere Seitenwand, die die in Längsrichtung des Frühbeetes hintereinander angeordneten Querwände miteinander verbinden. Nachteilig ist dabei, daß diese Seitenwände starr sind und das Arbeiten im Frühbeet mühsam machen, nachdem entweder vor der Seitenwand gekniet werden muß, oder aber bei genügend großen Frühbeeten im Frühbeet selbst gekniet werden muß, um im Frühbeet arbeiten zu können.

Weiters sind bereits Frühbeetkästen bekannt, die aus zwei in Längsrichtung des Frühbeetes hintereinander angeordneten Giebelwänden mit der Form eines Rechteckes mit aufgesetztem Dreieck und in Querrichtung des Frühbeetes nebeneinander angeordneten Fensterelementen bestehen. Dabei sind die senkrechten Seitenwände des Frühbeetkastens starr gehalten, während die längs der Seiten des Giebeldreiecks angeordneten Fensterelemente verschwenkbar gehalten sind. Diese Frühbeetkästen haben den Nachteil, daß durch die starr angeordneten Seitenwände eine Bodenbearbeitung nur durch umständliches Bücken möglich ist. Außerdem ist die Belüftung nicht sehr günstig, nachdem nur durch das Öffnen des Dachfensterelementes keine Zirkulation der im Frühbeet enthaltenen Warmluft eintreten kann, und demgemäß nur der Dachbereich ausreichend belüftet wird.

Aus der GB-A-641 859 ist eine auf einem auf vertikalen Stützen angebrachten Längsträger aufgehängte tunnelförmige Frühbeetabdeckung bekannt, die aus entlang dem Längsträger nebeneinander jeweils mit einem Ende aufgehängten, stumpf abgewinkelten, verglasten Rahmenelementen besteht, welche sich jeweils mit dem anderen Ende am Boden abstützen. Die stirnseitigen Öffnungen der tunnelförmigen Frühbeetabdeckung können durch Endplatten abgeschlossen werden, die auf den am Ende der Abdeckung am Längsträger aufgehängten Rahmenelementen befestigt sind. Zur Bodenbearbeitung im Frühbeet kann zwar die entsprechende Anzahl an Rahmenelementen von dem aus Stützen und Längsträger bestehenden Traggerüst abgenommen und zur Seite gelegt werden, dafür ist aber einerseits viel Platz erforderlich und andererseits können die Rahmenelemente dabei leicht verschmutzen. Beim Arbeiten im Bereich der Stirnenden der tunnelförmigen Abdeckung müssen immer auch die Endplatten zusammen mit den Rahmenelementen zur Seite gelegt werden, wodurch der Windschutz im ganzen Frühbeet während der Bodenbearbeitung wegfällt. Nachteilig sind weiters die durch das zusätzliche Traggerüst verursachten höheren Kosten.

Die Erfindung, wie sie in den Ansprüchen gekennzeichnet ist, löst die Aufgabe einen Frühbeetkasten zu schaffen, bei dem ein einfaches und angenehmeres Bearbeiten des Bodens sowie eine verbesserte Belüftbarkeit möglich ist

Durch die vorliegende Erfindung wird nicht nur die Belüftungsmöglichkeit des Frühbeetkastens sondern auch die Zugänglichkeit des Frühbeetes wesentlich verbessert. Für die Bodenbearbeitung im Frühbeet können die die Glieder der Abdeckung bildenden Plattenelemente flach aufeinandergelegt werden, ohne daß die Verbindung der Plattenelemente untereinander verloren geht. Die dadurch im Frühbeetkasten entstehende, bis zum Boden reichende Öffnung erlaubt es im Frühbeet auch mit am Stiel befestigten Rechen und Hauen in aufrechter Stellung zu arbeiten. Eine wesentlich verbesserte Lüftung ergibt sich durch das Öffnen der Abdeckung vom Boden aus, weil dadurch eine Belüftung sowohl im Bodenbereich als auch im Dachbereich erzielt wird, wobei durch die im Zusammenwirken mit den beiden Giebelwänden entstehende Kaminwirkung eine außerordentlich intensive, dosierbare Belüftung im ganzen Frühbeet bis zu den Giebelwänden hin entsteht.

Die aus miteinander verbundenen, flach aufeinanderlegbaren Plattenelementen bestehende Abdeckung läßt sich äußerst platzsparend zusammenlegen, wodurch der für die Abdeckung benötigte Stauraum beim Verstand des Frühbeetkastens oder bei dessen Aufbewahrung bei Nichtgebrauch möglichst klein ist.

Bei der Ausgestaltung der Erfindung nach Anspruch 2 wird der Frühbeetkasten nach oben und nach der Seite von zwei jeweils auf einer Seite der Giebelachse angeordneten Abdeckungen abgeschlossen, die jeweils aus schwenkbar miteinander verbundenen lichtdurchlässigen Plattenelementen bestehen und mittels des der Giebelachse benachbarten Plattenelementes am Längsträger aufgehängt sind und an den Giebelwänden anliegen. Zum Bearbeiten des Frühbeetes kann je nach Anordnung des Frühbeetes im Garten eine der beiden Abdeckungen sehr einfach aus dem Längsträger ausgehängt und zusammengelegt zur Seite gelegt oder auch auf die andere Abdeckung oben drauf gelegt werden. Die abgenommene Abdeckung gibt eine genügend große Öffnung frei, um das Frühbeet bequem zu bepflanzen oder stehend bearbeiten zu können. Auch zur Belüftung ist diese Ausführungsform ideal, nachdem beginnend von der kleinstmöglichen Lüftung durch stufenweises Hochschieben des untersten Plattenelementes nacheinander jeweils ein Plattenelement nach dem anderen hochgeklappt und auf das oberhalb angeordnete Plattenelement draufgelegt oder unter dieses darunter gelegt werden kann, sodaß eine zusätzliche Windsicherung für die teilweise aufgeklappte Abdeckung entfallen kann.

Bei einer Ausbildung gemäß Anspruch 3 können alle Plattenelemente der einen Abdeckung über die Giebelachse hinweg auf die Plattenelemente der auf der anderen Seite der Giebelachse angeordneten Abdeckung gelegt werden, ohne daß die Verbindung der Plattenelemente getrennt wird. Auf diese Weise sind die Plattenelemente sicher untergebracht. Diese Lösung bietet insbesondere zur Belüftung Vorteile, nachdem bei z.B. aus jeweils zwei Plattenelementen bestehenden Abdeckungen die Belüftung beginnend von der kleinstmöglichen Belüftung durch Hochschieben des unteren Plattenelementes durch Hochklappen dieses Plattenelementes über oder unter das obere Dach-Plattenelement vergrößert werden kann und bei Wunsch nach noch größerer Belüftung anschließend beide Plattenelemente einer Abdeckung über das gegenüberliegende obere Dach-Plattenelement der anderen Abdeckung windsicher und unverlierbar darübergeklappt werden kann.

Bei weiterer Ausgestaltung der Erfindung gemäß Anspruch 4 bildet eine einzige einteilige aber mehrgliedrige Abdeckung einen Deckel für den Frühbeetkasten mit seinen hintereinander angeordneten vorzugsweise lichtdurchlässigen Giebelwänden, wobei die nebeneinanderliegenden, untereinander jeweils beweglich verbundenen, lichtdurchlässigen fensterartigen Plattenelementen auf der einen Seite des Frühbeetkastens vom Boden des Frühbeetes bis zur Giebelachse hinauf und auf der anderen Seite der Giebelachse wieder bis zum Boden des Frühbeetes hinunter nebeneinander auf den Giebelwänden aufliegen. Diese einteilige Abdeckung ist insbesondere für das Umrüsten bereits bestehender Frühbeetkästen mit Giebelwänden von Vorteil. Es brauchen nur die Längsseitenwände des alten Frühbeetkastens entfernt und durch am Boden des Frühbeets angeordnete Längsträger ersetzt zu werden, worauf der im flach zusammengelegten Zustand angelieferte erfindungsgemäße Deckel nunmehr auseinandergefaltet und auf die beiden stirnseitigen Giebelwände aufgelegt zu werden braucht. Ein weiterer Vorteil liegt in der geringen Anzahl an Teilen, die beim Aufstellen und beim Abbau des Frühbeetkastens zusammengesetzt bzw. auseinandergenommen werden müssen, sowie in der Möglichkeit diese äußerst platzsparend zu verstauen.

Die Ausgestaltungen der Erfindung gemäß den Ansprüchen 7 und 8 erlauben es, die durch die Kaminwirkung einsetzende sehr intensive Belüftungswirkung zu Beginn der Belüftung sehr sorgfältig zu dosieren. Dies kann erfindungsgemäß auch dadurch erreicht werden, daß an den Giebelwänden im Bodenbereich Führungen mit Rastungen vorgesehen sind, in denen das im Bodenbereich befindliche Plattenelement der jeweiligen Abdeckung in kleinen Stufen fixiert werden kann. Wahlweise kann dieses Plattenelement auch von einem Lüftungsautomaten entsprechend der Innenraumtemperatur kontinuierlich angehoben werden.

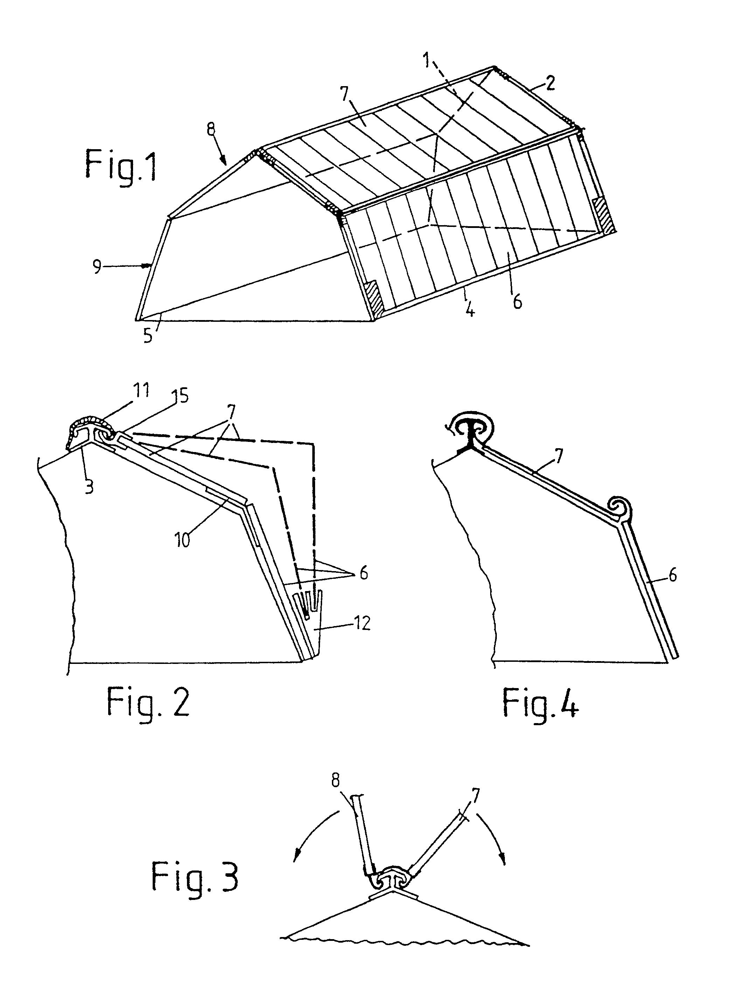

Nachstehend wird die Erfindung an Ausführungsbeispielen anhand der Zeichnungen näher erläutert. In den Zeichnungen zeigen Fig. 1 einen Frühbeetkasten in perspektivischer Ansicht, Fig. 2 im Schnitt, Fig. 3 ein Detail der Fig. 2 und Fig. 4 eine weitere Ausführungsform im Schnitt.

Gemäß Fig. 1 besteht der erfindungsgemäße Frühbeetkasten aus zwei im Abstand hintereinander angeordneten Giebelwänden 1, 2, deren Form annähernd einem Trapez mit aufgesetztem Dreieck entspricht und die vorzugsweise aus lichtdurchlässigen Kunststoffplatten, die von Aluprofilen gerahmt sind, bestehen. Diese Form hat einerseits den Vorteil alle Fensterflächen in möglichst stumpfen Winkel der Sonne zur Vermeidung von Reflexionsverlusten entgegenzuneigen, andererseits hat sich diese Form als besonders stabil gegenüber Witterungseinflüssen, wie z.B. Wind und Niederschlägen (Schnee) erwiesen. Selbstverständlich ist auch eine andere Form der Giebelwände, z.B. ein auf ein Rechteck aufgesetztes Dreieck möglich.

Die beiden Giebelwände 1, 2 werden einerseits im Bereich ihrer Giebeln durch einen Längsträger 3 in der Form eines besonders geformten Giebelprofils und andererseits durch zwei im Bodenbereich verlaufende Fußprofile 4, 5 zueinander parallel fixiert. Vorzugsweise erfolgt die Verbindung der genannten drei Profile 3, 4, 5 mit den Rahmenprofilen der stirnseitigen Giebelwände 1, 2 durch lösbare Verschraubungen, sodaß der Frühbeetkasten bei Nichtgebrauch einfach zerlegt und platzsparend bei Seite gelegt werden kann.

Eine bevorzugte Ausführungsform der vorliegenden Erfindung sieht vor, daß alle vier rechteckigen lichtdurchlässigen Plattenelemente 6 bzw. 7 und 8 bzw. 9 des Frühbeetkastens an ihren Längsseiten durch flexible Bandscharniere 10 bzw. 11 miteinander verbunden sind. Diese Scharniere können aus witterungsbeständigen Bändern aus Monofilen oder aber aus gewobenen Bändern bestehen und sind mit den vorzugsweise aus Kunststoffplatten bestehenden Plattenelementen so verbunden, daß diese auf den Umrissen der Giebelwände aufliegen können. Die beiden dem Längsprofil 3 bzw. der die Giebelspitzen der Giebelwände verbindenden Giebelachse nächstliegenden lichtdurchlässigen Plattenelemente 7 bzw. 8 sind dabei auf ihrer dem Längsprofil 3 zugewandten Seite mit Scharnierprofilen 15 verbunden, die in den als Giebelprofil ausgebildeten Längsträger 3 eingreifen und eine gelenkige Lagerung und Drehbewegung um diesen ermöglichen. Auch diese beiden lichtdurchlässigen Plattenelemente 7 bzw. 8 können, wie in Fig. 2 dargestellt an ihren Stirnseiten mit Bändern 11 verbunden sein. Diese Bänder 11 können ebenso, wie die Bänder 10 als flexible oder elastische Bänder ausgebildet sein.

Bei dieser vorgeschlagenen Ausführungsform geht das Einhängen der lichtdruchlässigen Plattenelemente nach Fig. 3 besonders einfach, indem das ganze durch die Bandscharniere gehaltene Plattenpaket mit den beiden lichtdurchlässigen Plattenelementen 7 und 8 angewinkelt und den Scharnierprofilen 15 voraus einfach auf das Profil des Längsträgers 3 gesenkt wird, worauf die lichtdurchlässigen Plattenelemente 7 bzw. 8 um ihren Drehpunkt in Position gebracht werden. Durch das Eingreifen der Scharnierprofile in das des Längsträgers 3 sind die lichtdurchlässigen Plattenelemente windsicher fixiert, können aber bei Bedarf umgekehrt wie beim Einhängevorgang einfach wieder entfernt werden.

Auch die lichtdurchlässigen Plattenelemente 6 bzw. 9 sind jeweils um ihr entsprechendes Band 10 drehbar mit den lichtdurchlässigen Plattenelementen 7 bzw. 8 verbunden, sodaß je nach Wunsch und Bedarf zur Belüftung oder zur Arbeit im Frühbeet ein Plattenelement nach dem anderen hochgeschwenkt werden kann.

Die stufenweise Öffnung beginnt beim Plattenelement 6 bzw. 9, welches um das Band 10 geschwenkt und unter das Plattenelement 7 bzw. 8 gelegt wird. Reicht diese Öffnung noch nicht aus, wird nun das Plattenelement 7 bzw. 8 nach oben verschwenkt und mit dem damit verbundenen Plattenelement 6 bzw. 9 auf das jeweils noch geschlossene Plattenelement 7 bzw. 8 gelegt. Damit ist eine volle Hälfte des erfindungsgemäßen Frühbeetkastens zur Belüftung oder ungehinderten Bearbeitung bis in den Bodenbereich ohne Bücken oder Knien zugänglich.

Eine andere mögliche Ausführungsform der gelenkigen Verbindung der Plattenelemente ist in Fig. 4 gezeigt. Sie sieht statt der vorgeschlagenen Bandscharniere die entsprechende Ausformung der Plattenprofile in der Art vor, daß diese an ihren zueinander gerichteten Seiten scharnierartig ineinandergreifen.

## Patentansprüche

1. Frühbeetkasten mit zwei in einer Richtung mit Abstand hintereinander angeordneten, vorzugsweise lichtdurchlässigen, Giebelwänden (1,2) und mit sich in dieser Richtung erstreckenden, quer zu dieser Richtung nebeneinander angeordneten und an den beiden Giebelwänden (1,2) jeweils auf einem Teil von deren Umriß anliegenden lichtdurchlässigen fensterartigen Plattenelementen (6, 7, 8, 9), wobei der von den beiden Giebelwänden (1,2) an zwei entgegengesetzten Seiten begrenzte Innenraum des Frühbeetkastens an den übrigen Seiten und nach oben hin von den lichtdurchlässigen fensterartigen Plattenelementen (6, 7, 8, 9) begrenzt ist, von denen beidseits der die Spitzen der beiden Giebelwände (1,2) verbindenden Giebelachse jeweils zumindest zwei Plattenelemente (6,7 bzw. 8,9) angeordnet sind, von denen zumindest die der Giebelachse unmittelbar benachbart angeordneten Plattenelemente (7,8) von den Giebelwänden (1,2) abnehmbar sind, dadurch gekennzeichnet, daß zumindest alle auf einer Seite der Giebelachse quer zu dieser nebeneinander angeordneten Plattenelemente (6,7 bzw. 8,9) eine von den Giebelwänden (1,2) abnehmbare, sich vom Boden des Frühbeetkastens bis zur Giebelachse erstreckende einteilige aber mehrgliedrige lichtdurchlässige Abdeckung aus an ihren zur Giebelachse parallelen Rändern untereinander beweglich verbundenen Plattenelementen (6,7 bzw. 8,9) bilden, wobei das der Giebelachse unmittelbar benachbarte Plattenelement (7, 8), wie an sich bekannt, im Bereich der Giebeln der Giebelwände (1, 2) schwenkbar aufgehängt ist.

2. Frühbeetkasten nach Anspruch 1, dadurch gekennzeichnet, daß sowohl alle auf der einen Seite als auch alle auf der anderen Seite der Giebelachse jeweils quer zu dieser nebeneinander angeordneten Plattenelemente (6, 7 bzw. 8, 9) jeweils eine eigene einteilige aber mehrgliedrige Abdeckung bilden, wobei die der Giebelachse unmittelbar benachbarten Plattenelemente (7, 8) an einem die beiden Giebelwände (1, 2) im Bereich ihrer Giebeln miteinander verbindenden Längsträger (3) schwenkbar aufgehängt sind.

3. Frühbeetkasten nach Anspruch 2, dadurch gekennzeichnet, daß auch die der Giebelachse unmittelbar benachbarten, am Längsträger (3) schwenkbar aufgehängten Plattenelemente (7, 8) beider Abdeckungen beweglich miteinander verbunden sind.

4. Frühbeetkasten nach Anspruch 1, dadurch gekennzeichnet, daß alle quer zur Giebelachse nebeneinander angeordneten untereinander beweglich verbundenen Plattenelemente (6, 7, 8, 9) des Frühbeetkastens eine einzige einteilige aber mehrgliedrige, von den Giebelwänden (1, 2) abnehmbare lichtdurchlässige Abdeckung bilden, die sich entlang den Umrissen der Giebelwände (1, 2) vom offenen Boden des Frühbeetkastens auf der einen Seite bis zur Giebelachse hinauf und auf der anderen Seite der Giebelachse wieder bis zum Boden des Frühbeetkastens hinunter erstreckt und bei der die der Giebelachse unmittelbar benachbarten Plattenelemente (7, 8) in einem die beiden Giebelwände (1, 2) im Bereich ihrer Giebeln miteinander verbindenden Längsträger (3) einhängbar sind.

5. Frühbeetkasten nach einem der Ansprüch 1-4, dadurch gekennzeichnet, daß die Plattenelemente (6, 7, 8, 9) untereinander über flexible Bänder (10, 11) verbunden sind.

6. Frühbeetkasten nach einem der Ansprüche 1-4, dadurch gekennzeichnet, daß die Plattenelemente (6, 7, 8, 9) untereinander über Scharniere verbunden sind.

7. Frühbeetkasten nach einem der Ansprüch 1-6, dadurch gekennzeichnet, daß die jeweils an den Boden des Frühbeetkastens anschließenden Plattenelemente (6, 9) in zum entsprechenden Abschnitt des Umrisses der Giebelwände (1, 2) parallelen, an den Giebelwänden (1, 2) vorgesehenen Führungen mittels eines temperaturempfindlichen Lüftungsautomaten aus der Geschlossenstellung in unterschiedliche Lüftungsstellungen verschiebbar sind.

8. Frühbeetkasten nach einem der Ansprüche 1-6, dadurch gekennzeichnet, daß die jeweils an den Boden des Frühbeetkastens anschließenden Plattenelemente (6, 9) in an den Giebelwänden (1, 2) im Bereich dieses Bodens angeordnete Halteelemente (12) einführbar sind, welche der Geschlossenstellung und unterschiedlichen Lüftungsstellungen zugeordnete Ausnehmungen besitzen.

## Claims

1. Cold frame with two gable walls (1, 2) which are disposed at a distance one behind the other and are preferably light-permeable, and with light-permeable window-like plate elements (6, 7, 8, 9) which extend in this direction, are disposed transversely to this direction adjacent one another and abut against the gable walls (1, 2) in each case on part of the periphery thereof, wherein the inner space of the cold frame which is delimited on two opposite sides by the two gable walls (1, 2) is delimited on the other sides and at the top by the light-permeable window-like plate elements (6, 7, 8, 9) of which on both sides of the gable axis which connects the tips of the two gable walls (1, 2) there are disposed at least two plate elements (6, 7 or 8, 9), in each case, of which at least the plate elements (7, 8) which are disposed immediately adjacent the gable axis can be removed from the gable walls (1, 2), characterised in that at least all the plate elements (6, 7 or 8, 9), which are disposed adjacent one another on one side of the gable axis transversely to the gable axis, form a light-permeable cover which is formed in one piece but has several members, and can be removed from the gable walls, (1, 2) and extends from the base of the cold frame to the gable axis, which cover is formed by plate elements (6, 7 or 8, 9) which are connected in such a manner that they can be displaced with respect to one another at their edges which are parallel to the gable axis, wherein the plate element (7, 8) which is immediately adjacent the gable axis is suspended in a pivotable manner known per se in the vicinity of the gables of the gable walls (1, 2).

2. Cold frame according to claim 1, characterised in that both all plate elements (6, 7 or 8, 9) which are disposed adjacent one another transversely to the gable axis on one side of the gable axis and also all plate elements on the other side form in each case a cover which is in one piece but has several members, wherein the plate elements (7, 8) which are immediately adjacent the gable axis are suspended in a pivotable manner on a longitudinal carrier (3) which interconnects the two gable walls (1, 2) in the vicinity of their gables.

3. Cold frame according to claim 2, characterised in that the plate elements (7, 8), of both covers, which are immediately adjacent the gable axis and are suspended in a pivotable manner on the longitudinal carrier (3), are also displaceably connected to one another.

4. Cold frame according to claim 1, characterised in that all plate elements (6, 7, 8, 9) of the cold frame, which are disposed adjacent to one another transversely to the gable axis in a manner such that they can be displaced with respect to one another, form a single light-permeable cover which is formed in one piece but has several members, can be removed from the gable walls (1, 2) and extends along the peripheries of the gable walls (1, 2) from the open base of the cold frame on one side up to the gable axis and downwards on the other side of the gable axis to the base of the cold frame and in the case of which the plate elements (7, 8) which are immediately adjacent the gable axis can be suspended in a longitudinal carrier (3) which interconnects the two gable walls (1, 2) in the vicinity of their gables.

5. Cold frame according to any one of claims 1 to 4, characterised in that the plate elements (6, 7, 8, 9) are connected to one another via flexible straps (10, 11).

6. Cold frame according to any one of claims 1 to 4, characterised in that the plate elements (6, 7, 8, 9) are connected to one another via hinge joints.

7. Cold frame according to any one of claims 1 to 6, characterised in that the plate elements (6, 9), which are adjacent the base of the cold frame, in each case, can be displaced in guiding means, which are provided on the gable walls (1, 2) and extend parallel to the corresponding section of the periphery of the gable walls (1, 2), by means of an automatic temperature-sensitive ventilating device from the closed position into various ventilating positions.

8. Cold frame according to any one of claims 1 to 6, characterised in that the plate elements (6, 9) which are adjacent the base of the cold frame, in each case, can be inserted in holding elements (12) which are disposed on the gable walls (1, 2) in the vicinity of this base and comprise recesses which are associated with the closed position and various ventilating positions.

**Revendications**

1. Châssis de couche comportant deux parois de pignon (1, 2) de préférence transparentes, disposées à distance, l'une à la suite de l'autre dans une direction, ainsi que des éléments en forme de plaque (6, 7, 8, 9) transparents, du type fenêtre, s'étendant dans cette direction, disposés côte à côte transversalement à cette direction et appuyés sur les deux parois de pignon (1, 2), chacun sur une partie du contour de ces dernières, l'espace intérieur du châssis de couche délimité sur deux côtés opposés par les deux parois de pignon (1, 2) étant délimité sur les autres côtés et vers le haut par les éléments en forme de plaques (6, 7, 8, 9) transparents, du type fenêtre, au moins deux de ces éléments en forme de plaques (6, 7 et 8, 9) étant disposés respectivement de chaque côté de l'axe de pignon reliant les sommets des deux parois de pignon (1, 2), et dont au moins les éléments en forme de plaque (7,8) directement voisins de l'axe de pignon peuvent être retirés des parois de pignon (1, 2), caractérisé en ce qu'au moins tous les éléments en forme de plaque (6, 7 et 8, 9) disposés côte à côte d'un côté de l'axe de pignon, transversalement à celui-ci, forment un ensemble de couverture transparent d'un seul tenant, mais à articulations multiples, susceptible d'être retiré des parois de pignon (1, 2), s'étendant du fond du châssis de couche jusqu'à l'axe de pignon et constitué d'éléments en forme de plaques (6, 7 et 8, 9) reliés entre-eux, de manière mobile, le long de leurs bords parallèles à l'axe de pignon, l'élément en forme de plaque (7, 8) directement voisin de l'axe de pignon étant, de manière connue en soi, suspendu de façon pivotante dans la zone des pignons des parois de pignon (1, 2).

2. Châssis de couche selon la revendication 1, caractérisé en ce qu'aussi bien tous les éléments en forme plaque (6, 7) disposés côte à côte d'un côté de l'axe pignon, que ceux (8, 9) disposés côte à côte de l'autre côte de cet axe de pignon et chacun transversalement par rapport à celui-ci, constituent respectivement un ensemble de couverture individuel, d'un seul tenant mais à articulations multiples, les éléments en forme de plaque (7, 8) directement voisins de l'axe de pignon étant suspendus de manière pivotante, sur un longeron (3) reliant entre-elles les deux parois de pignon (1, 2) dans la zone de leurs pignons.

3. Châssis de couche selon la revendication 2, caractérisé en ce que les éléments en forme de plaque (7, 8) des deux ensembles de couverture, directement voisins de l'axe de pignon et suspendus de manière pivotante sur le longerons de support (3), sont également reliés entre-eux de manière mobile.

4. Châssis de couche selon la revendication 1, caractérisé en ce que tous les éléments en forme de plaque (6, 7, 8, 9) du châssis de couche, reliés entre-eux de manière mobile et disposés côte à côte transversalement à l'axe de pignon, constituent un ensemble de couverture unique, transparent, d'un seul tenant mais à articulations multiples, qui peut être retiré des parois de pignon (1, 2) et s'étendant le long des contours des parois de pignon (1, 2) en s'élevant d'un côté, à partir du fond ouvert du châssis de couche jusqu'à l'axe de pignon et, de l'autre côté, en redescendant de l'axe de pignon jusqu'au fond du châssis de couche, et pour lequel les éléments en forme de plaque (7, 8) directement voisins de l'axe de pignon peuvent être suspendus sur un longeron (3) reliant entre-elles les deux parois de pignon (1, 2) dans la zone de leurs pignons.

5. Châssis de couche selon l'une des revendication 1 à 4, caractérisé en ce que les éléments en forme de plaque (6, 7, 8, 9) sont reliés entre-eux par l'intermédiaire de bandes flexibles (10, 11).

6. Châssis de couche selon l'une des revendications 1 à 4, caractérisé en ce que les éléments en forme de plaque (6, 7, 8, 9) sont reliés entre-eux par l'intermédiaire de charnières.

7. Châssis de couche selon l'une des revendications 1 à 6, caractérisé en ce que les éléments en forme de plaque (6, 9) se raccordant chacun au fond du châssis de couche, peuvent être déplacés dans des guidages prévus sur les parois de pignon (1, 2) et parallèles à la partie correspondante du pourtour des parois de pignon (1, 2), d'une position de fermeture à différentes positions d'aération, au moyen d'un dispositif automatique d'aération sensible à la température.

8. Châssis de couche selon l'une des revendications 1 à 6, caractérisé en ce que les éléments en forme de plaque (6, 9) se raccordant chacun au fond du châssis de couche, peuvent être introduits dans des éléments de support (12) disposés au niveau de ce fond sur les parois de pignon (1, 2), et pourvus d'évidements affectés à la position de fermeture et à différentes positions d'aération.

Fig.1

Fig. 2

Fig.4

Fig. 3